# EUROPEAN PATENT SPECIFICATION

(11) **EP 3 079 628 B1**
(45) Date of publication and mention of the grant of the patent: **04.09.2019**
(21) Application number: 14863818.2
(22) Date of filing: 13.10.2014
(51) Int. Cl.: A61C 8/00, A61C 13/00

(54) **ONE PIECE CUSTOM MADE DENTAL DEVICE FOR HOLDING MULTIPLE TEETH**
EINTEILIGE MASSGESCHNEIDERTE DENTALE VORRICHTUNG ZUM HALTEN MEHRERER ZÄHNE
DISPOSITIF DENTAIRE SUR MESURE EN UNE PIÈCE SUPPORTANT PLUSIEURS DENTS

(30) Priority: 15.10.2013 IN 3230MU2013
(43) Date of publication of application: 19.10.2016
(73) Proprietor: Cota, Marvin, Chicalim, Goa 403711 (IN)
(72) Inventor: Cota, Marvin, Chicalim, Goa 403711 (IN)
(74) Representative: Sanger, Phillip Simon
(86) International application number: PCT/IN2014/000650
(87) International publication number: WO 2015/075732

(56) References cited:
- WO-A1-97/01306
- US-A- 4 244 689
- US-A1- 2010 035 207
- US-A1- 2013 209 961
- US-A1- 2013 209 961

## Description

### Field of invention

The present invention relates to field of dentistry. More particularly it relates to custom made one piece dental device for holding multiple teeth in which the dental implants are integrated as one piece unit without joint.

### Background of the invention:

Teeth are essential part of human body and they play vital role in our digestive system. People lose one or more teeth because of many reasons such as infection, gum disease, accident or injury. Removal of natural teeth may cause different problems. The remaining teeth shift, rotate and become crooked. An improper bite will develop, making it very difficult to chew food properly. Spaces and gaps between teeth may cause embarrassment, problems with speech or smile and lack of self-confidence. Dental implants are used to restore missing teeth. People who have teeth replaced with dental implants report better ability to chew food and eat properly, renewed confidence while speaking, smiling. Dental implants are inserted into jaw bone to restore a mouth with little or non-restorable teeth.

Currently wide verity of dental implants is available., Dental implants are manufactured in different shapes and sizes depending on the different parameters like implant placement method and client's bone data. Generally Subperiosteal dental implants, Transosseous dental implants and Endosseous dental implants are used by the dentists. The endosteal implant can be root form, blade form or ramus frame form implant. Root form implant iss generally made up of titanium and implanted into the jawbone. It supports crowns, bridges and dentures. It is used when the jawbone is strong and has desired height and width to place the implant. Blade form implant is also known as plate form implant. It is done when the jawbone is too narrow and not suitable for bone grafting. When the client has no enough bone or thin bone then the ramus frame implant i.e. thin metal bar is used to provide root to replace missing teeth.

Commonly dental implants are differentiated as: a threaded or screw-type implant, press-fit implant and blade implant. Frequently, the type of implant chosen depends on the ability of the implant to maintain its position within the jaw over a period of time. In the recent decades, implant surface gradually switched from press-fit, cylindrical fixtures to threaded ones. A threaded implant leads to more immediate stability and helps for Osseointegration. A threaded form additionally facilitates self-tapping, which eases placement. Then rough textured based implants came up which raised the percentage of bone-to-implant contact and also accelerated wound healing.

There are various approaches to place dental implants after tooth extraction. These approaches are: 1. Immediate post-extraction implant placement, Delayed immediate post-extraction implant placement (2 weeks to 3 months after extraction) and Late implantation (3 months or more after tooth extraction) . In Conventional dental implantation, the dentist makes a cut in the gums, to access the jaw bone underneath. Then small holes are drilled into the jaw bone; as per the available bone and the collar of the implant may be above or below the gum line. Three to six months of healing period is required to ensure that the implants are fully integrated into the bone tissue. After healing, a crown or a bridge (consisting of a few crowns) is designed and attached to the protruding implant head (or prong). These implants cannot be loaded immediately as the implant needs to be in the bone for 3-6 months. Depending of higher densities of bone available attempts is made to immediately load sometimes successfully and sometimes unsuccessfully with much nervousness.

To replace the multiple teeth, implant supported bridges are used to distribute the occlusion forces. These bridges can be held by screw or cement. On some occasions there could be the possibility of the implants failing, breaking or loosening of screws. Crowns may come out. Conventionally two types of implant-supported dentures are used viz. bar-retained and ball-retained. In both cases, the denture is made up of an acrylic base that looks like gums. Porcelain or acrylic teeth that look like natural teeth are attached to the base. Minimum two implants are needed for support in both dentures. Metal bar is placed over abutment which is fitted by screw. Essential replacement of the clip and other attachments for every six to twelve months is the major problem associated with it.

Failure of the implant integration with surrounding bone is the common problem associated with dental implants.

Another problem is structural failure of the dental implant. After complete integration of the dental implant, there could be loss of bone leading to failure of the implant if there is excessive pressure exerted on it. There are many forces working on teeth like rotational, eccentric, shear and micro movement which looses the structure from the bone. There is possibility for implants' failing, breaking or loosening of screws and bars.

Furthermore, in the conventional dental implantation approach, the total treatment time varies from three months to six months approximately.

Patent EP20070106211 describes the new multiple endosseous dental implant with an enbloc structure comprising pins (C, E, M) that are aligned in parallel, for insertion in holes drilled in bone. A prosthetic connector (A) is fitted with upper end of pins for attaching prosthetic post (P). A connection bar (B) is inserted in grooves that connect holes, such that connection bar is orthogonal to pins, for connecting upper ends of pins.

This invention ensure that an optimal anchorage even in the case of a very limited height and thickness of bone being available. On the other hand as the parallel pins are substantially adjacent to one another the structure may not suitable for complete denture replacement. Also as central pin and mesial pin are larger than the third pin to reduce the load on bone therefore the pins are unable to take advantage of the available bone and as such the size of the pins has to be fixed. Further the size of the pin structure is predetermined which is not suitable for implantation approaches where custom made implants are required.

US patent No. 20040142300 describes an intra oral framework comprising a group of inter-connecting, prefabricated components of various shapes and sizes that are assembled together to form a framework system directly onto dental implants-installed in the mouth. This prefabricated - framework forms a drill guide system for drilling a properly spaced and oriented implant hole adjacent to another implant hole or adjacent to a fully-installed implant. It also describes -implant-supported dental restorations, including an immediate loading procedure. However as this dental implant framework is made up of connecting abutment with bars through screw fitting, there is high possibility of the implant failing, breaking or loosening of screws and bars.

Patent US 13/767,999 describes integrated support devices for providing temporary primary stability to a customized dental prosthesis implant wherein conventional computer assisted systems and methods for designing and manufacturing custom dental prosthesis are used. An integrated support device includes a prosthesis interface member configured to connect to an abutment or reduced sized portion of a dental prosthesis/implant and one or more bonding wings for connecting to the adjacent healthy teeth. As it provides primary temporary stability to a dental implant hence cannot be used for long term application.

Patent US19930067801 describes a bracing dental implant system in which multiple dental implants are integral with each other by connecting attachment bar. The attachment bar or rod is firmly placed in each slot of each implant head and is appropriately contoured to the gum and/or jaw line is located a precise minimal distance above the gingiva/gum. However, since attachment bar is placed in the slot of implant head it causes loosening of screws or breakage of the bar.

US patent application published as US2010/0035207 A1 describes a structure of artificial teethridge and fang, the artificial teethridge having an arched top and an arched bottom. The arched bottom forms a mechanical support structure comprising a plurality of posts acting as implants. The arched top comprises a plurality of fangs supporting an arch shaped prosthesis base.

At present no promising solution is in dentistry to overcome above disadvantages in time and cost effective way. Hence there is a need of one piece dental device for holding multiple teeth in which the dental implants are integrated as one piece unit without joints which can be placed in any kind of bone density data and different type of implantation approaches which supports partial or complete prosthesis either fixed cemented or screw retained.

### Object of the invention:

The object of the present invention is to provide one piece custom made dental device for holding multiple types of prosthesis according to claim 1.

### Summary of the invention:

Accordingly the present invention provides a one piece custom made dental device as defined by claim 1. This one piece dental device is used to restore the mouth with two or more or all missing teeth. It provides a readymade implants structure with abutments and pontics to the receiver according to their own hard and soft tissue data in one or single attempt; which is ready to deliver the prosthesis immediately after its placement in the bone. The dental device according to the present invention comprises of a mono block of two or more integrated dental implants with wide base, abutments, pontics and supracrestally or supragingivally connecting bars. Hereinafter the term "supracrestally" or "supragingivally" is referred interchangeably. The dental implants are supracrestally connected to each other without screws or joints. This dental device provides higher primary and secondary stability to the dental implants through mono block structure. The dental device is suitable for different bone density data (e.g. D1, D2) and different types of implantation approaches like Immediate post-extraction implant placement, Delayed immediate post-extraction implant placement (2 weeks to 3 months after extraction) and Late implantation (3 months or more after tooth extraction). Also the dental device can sustain different type of prosthesis such as partial or full, fixed and fixed detachable. Particularly this dental device provides mono block of dental implant for immediate loading with permanent prosthesis either in acrylic or zirconia or hybrid.

A technique for installing a mono block of dental implant is as follows:
- Obtaining the receiver's soft and hard tissue data by clinical and radiological methods (by CT scan or other 3D imaging) and Occlusal recordings.
- Locating the sites where the dental implant is to be inserted and determining the implant portion number and size accordingly. (The number of dental implant depends on the requirement of missing teeth and load bearing; the size of the dental implant portion may differ from site to site).
- Setting up abutments and pontics structure according to the occlusion and other requirements fully integrated with the implant portion.
- Fabricating the dental implants, abutments and pontics as one piece and interconnected to each other supracrestally by various available manufacturing procedures as one large mono block or one piece framework as shown in the diagrams.
- Preparing a surgical stent according to above one piece framework and tapping the entire framework into located position of the bone through the osteotomies prepared via the stent.
- Delivering the prosthesis made according to bone data. (The prosthesis may be prefabricated according to the bone data or impressions can be made after placement of the implant abutment pontics framework).

Dental Implants used in a mono block dental device may be dual or multiple according to requirement.

One or more such mono blocks or one piece frameworks are determined for the same receiver in case of full mouth restoration, as best suited and required by the professional.

There is a provision in the abutment or pontics portion to convert it to screw retained type. All the framework is custom made and can be manufactured simultaneously in advance.

In very poor cases, an anterior interconnected framework can be made with ball abutments or provision for screw retained prosthesis and as even doing away with ball abutments is possible.

**The advantages presented by the invention are as follows:**
1) The time frame between placement and loading of the implants is reduced drastically (minimum 48 hours to maximum one week)
2) The implants can be sized and positioned according to the receivers bone data for each receiver according to his/her bone data.
3) Bone grafting procedures may be avoided.
4) Manufacturing procedure is as per receivers' bone and gum data and all parameters of occlusion can be done by all available processes.
5) Zirconia in addition to titanium can be used for making dental implants.
6) Abutment portion can be in one piece or two pieces.
7) Drastic reduction in components and attachment parts leads to fewer inventories, no stock keeping etc., no breakages or loosening of screws.
8) Each patient has own identity as the entire framework is made as per his/her own bone data.
9) Bone Data can be used for forensic dentistry.
10) Implantation can be done flapless.
11) Silicone or other rings can be added to abutment for periodontal effect.
12) Cost effective and time saving implantation approach is achieved.
13) Zirconia having close properties of titanium can be used for the entire framework manufacturing. Single root form implants of zirconia are being used for front teeth as usage in back teeth shows chances of fracture. This invention being of one piece reduces almost totally the possibility of fracture, hence the receiver has a great possibility of having the implant portion and the supra crestal structure in zirconia making it near natural teeth in terms of colour there being a great need for such a device.

The invention is now exemplified with the accompanying drawings in which like references are intended to refer to like or corresponding parts.

### Detailed description of the invention with reference to the accompanying drawings:

The features of the invention, and its technical advantages, can be seen from the following description of preferred embodiments together with the claims and the accompanying schematic drawings, in which:
FIG. 1 is perspective view of present invention to replace 4 teeth with 3 dental implants
FIG. 2A and 2B are perspective view of the present invention placed within jaw bone with multiple implants and pontics.
Fig.3A and 3B are perspective view of the dental implant.

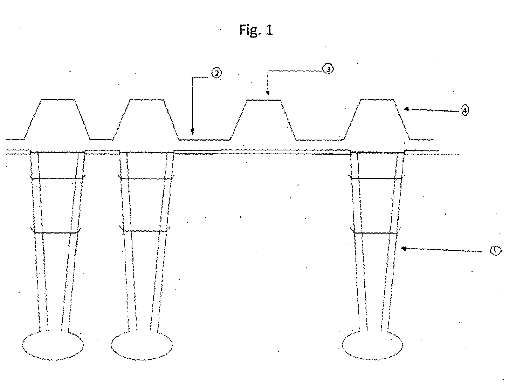

An One piece custom made dental device as illustrated in **FIG. 1** of the drawings, comprises abutment(1), supracrestal or supragingival connecting bar(2), pontics(3) and dental implant(4).

Abutment(1) or Pontics(3) superstructure is to receive final prosthesis.

The abutment(l) or pontic(3) is tapered towards the occlusal surface with or without internal thread and with or without external groove . Each implant has a supracrestal connecting bar(2) to integrate with the next implant with abutments made receivable for prosthesis according to bone data. Abutments can also be made detachable. The shape and size of the abutment is variable according to the receivers' requirement and bone data.

The supracrestal or supragingival connecting bar(2) are without any screw or joint and are used to integrate the two or more dental implants(4) as one piece structure.

Dental implant (4) portion of the framework forms root for the teeth. It is custom made and manufactured in various sizes and shapes according to the receiver's bone data. The dental implant of titanium and zirconia material is preferred in dental device according to present invention. Also the complete mono block can be manufactured in zirconia in addition to titanium.

The one piece framework reduces to a greater extent the micro movements and other forces acting on the framework during function by distribution of forces and makes it much greater load bearing capacity.

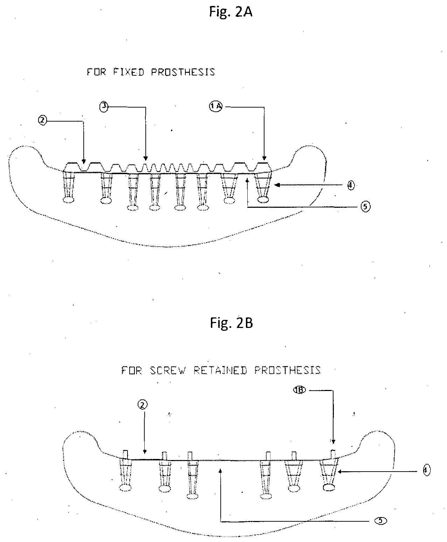

**Fig 2A** illustrates another form of the invention wherein one piece custom made dental device is placed within jaw bone with multiple implants and pontics. It shows entire one piece frameworks used in case of full jaw restoration for fixed prosthesis

**Fig. 2B** shows entire one piece frameworks used in case of full jaw restoration for screw retained prosthesis

As shown in the fig.2A and 2B the dental implants (4) are integrated in one piece supracrestally i.e. above the bone (5) and thus minimize the bone loss.

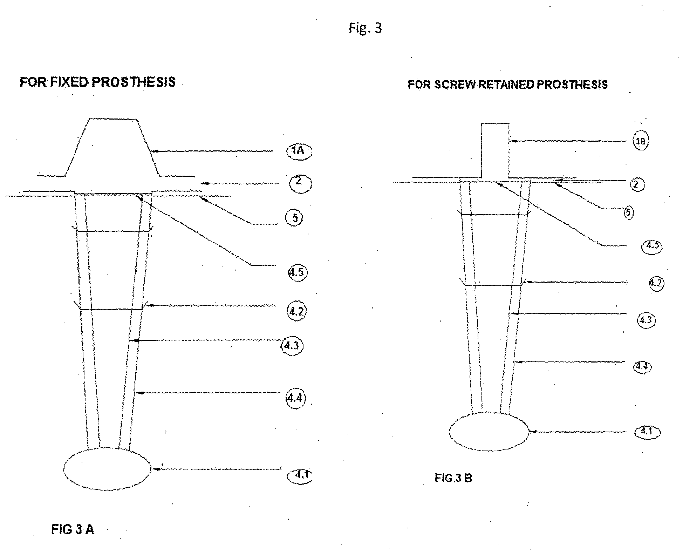

**Fig. 3A** is perspective view of the dental implant with fixed prosthesis used in the dental device

**Fig. 3B** **is** perspective view of the dental implant with screw retained prosthesis used in the dental device

The Dental implant (4) portion of mono block comprises wide base(4.1), inverted thread (4.2), vertical thread (4.3), implant body portion(4.4), and crestal supporting thread(4.5).

Dental implant (4) is custom made and manufactured in various sizes and shapes according to the receiver's bone data. The bone data is used to determine the length and diameter of the implant body portion(4.4). The implant body portion (4.4) may be made as long and wide as required so as increase the primary stability significantly. The surface area of the implant body portion(4.4) can also be increased greatly for greater bone implant contact providing higher primary and secondary stability. The surface area of the implant body portion(4.4) is textured through available process like HA MTX, SLA, nanotechnology, etc. to accelerate osseointegration process.

Abutment (1) includes abutment portion, optional thread, and groove. Abutment portions are made according to receiver's requirements either for 2 or more or for all teeth. The abutment portion may be screw retained prosthesis abutment portion (1B) or fixed prosthesis abutment portion (1A) as illustrated in Fig.3B and Fig.3A respectively. The optional thread into the abutment or into the base of the crestal side is for screw retained prosthesis (1B). There is groove on the body of the abutment to add silicone ring or other metal rings for cushioning effect of the prosthesis.

The wide base (4.1) of all implants portion is flat and broader than the implant body portion (4.4) at the lower one third. The broader and flat base reduces the shear forces of occlusion to greater extent than conventional implants without the base. The base (4.1) may be rectangular or circular in shape.

The inverted threads (4.2) are used to divert the forces laterally thereby reducing the forces apically. The vertical threads (4.3) are used to tap the implant at required place in the bone with ease. The Crestal supporting thread(4.5) is used for firm contact with crestal bone.

The dental implants' (4) supracrestal area either subgingivally, supragingavally or at gingival level includes a flare with a shoulder or chamfer. The shoulder and chamfer is to give finishing margins for the prosthesis as determined by the professional.

## Claims

1. A one piece custom made dental device for holding multiple types of prosthesis comprising a mono block having a plurality of supracrestally integrated dental implants (4) without any joint, wherein the one piece custom made dental device further comprises abutments (1), supracrestally connecting bars (2) and pontics (3); the one piece custom made dental device wherein each implant of the plurality of dental implants (4) comprises:
a wide base (4.1);
an inverted thread (4.2);
a vertical thread (4.3);
implant body portion (4.4), and,
a crestal supporting thread (4.5).

2. The one piece custom made dental device for replacing multiple teeth as claimed in claim 1, in which the wide base (4.1) is flat and broader than the lower third of the implant body portion (4.4); such that the base (4.1) reduces the shear forces of occlusion.

3. The one piece custom made dental device for replacing multiple teeth as claimed in claim 1 or claim 2, wherein the mono block is manufactured from zirconia and / or titanium.

## Patentansprüche

1. Einteilige maßgeschneiderte dentale Vorrichtung zum Halten mehrerer Arten von Prothesen, umfassend einen Monoblock mit einer Vielzahl von supracrestal integrierten dentalen Implantaten (4) ohne jegliche Verbindung, wobei die einteilige maßgeschneiderte dentale Vorrichtung ferner Abutments (1) umfasst, die Stangen (2) und Brückenglieder (3) supracrestal verbinden; wobei die einteilige maßgeschneiderte dentale Vorrichtung, wobei jedes Implantat der Vielzahl von dentalen Implantaten (4) Folgendes umfasst:
eine breite Basis (4.1);
ein umgekehrtes Gewinde (4.2);
ein vertikales Gewinde (4.3);
Implantatkörperabschnitt (4.4) und
ein crestales Stützgewinde (4.5).

2. Einteilige maßgeschneiderte dentale Vorrichtung zum Ersetzen mehrerer Zähne nach Anspruch 1, wobei die breite Basis (4.1) flach und breiter ist als das untere Drittel des Implantatkörperabschnitts (4.4); sodass die Basis (4.1) die Scherkräfte der Okklusion reduziert.

3. Einteilige maßgeschneiderte dentale Vorrichtung zum Ersetzen mehrerer Zähne nach Anspruch 1 oder Anspruch 2, wobei der Monoblock aus Zirkoniumoxid und/oder Titan hergestellt ist.

## Revendications

1. Dispositif dentaire en une pièce fabriqué sur-mesure pour supporter plusieurs types de prothèses, comprenant un monobloc ayant une pluralité d'implants dentaires (4) intégrés de manière supracrestale sans aucune articulation, dans lequel le dispositif dentaire en une pièce fabriqué sur-mesure comprend en outre des piliers (1), des barres de liaison supracrestales (2) et des pontiques (3) ; le dispositif dentaire en une pièce fabriqué sur-mesure, dans lequel chaque implant parmi la pluralité d'implants dentaires (4) comprend :
une base large (4.1) ;
un filetage inversé (4.2) ;
un filetage vertical (4.3) ;
une partie corps d'implant (4.4), et
un filetage de support crestal (4.5).

2. Dispositif dentaire en une pièce fabriqué sur-mesure pour le remplacement de plusieurs dents selon la revendication 1, dans lequel la base large (4.1) est plate et plus large que le tiers inférieur de la partie corps d'implant (4.4) ; de sorte que la base (4.1) réduit les forces de cisaillement de l'occlusion.

3. Dispositif dentaire en une pièce fabriqué sur-mesure pour le remplacement de plusieurs dents selon la revendication 1 ou la revendication 2, dans lequel le monobloc est fabriqué à partir de zircone et/ou de titane.
